# EUROPÄISCHE PATENTSCHRIFT

(11) **EP 1 963 109 B1**
(45) Veröffentlichungstag und Bekanntmachung des Hinweises auf die Patenterteilung: **21.10.2009**
(21) Anmeldenummer: 06841054.7
(22) Anmeldetag: 20.12.2006
(51) Int. Cl.: B60B 27/00, F16C 19/52, F16C 33/66

(54) **RADNABENANORDNUNG**
WHEEL HUB ARRANGEMENT
ARRANGEMENT DE MOYEU DE ROUE

(30) Priorität: 22.12.2005 DE 102005062095
(43) Veröffentlichungstag der Anmeldung: 03.09.2008
(73) Patentinhaber: SAF-HOLLAND GmbH, 63856 Bessenbach-Keilberg (DE)
(72) Erfinder: KOSCHINAT, Hubert, 63768 Hösbach (DE)
(74) Vertreter: Bauer, Clemens
(86) Internationale Anmeldenummer: PCT/EP2006/012308
(87) Internationale Veröffentlichungsnummer: WO 2007/079945

(56) Entgegenhaltungen:
- WO-A1-01/45993
- DE-A1- 10 242 199
- DE-A1- 19 963 295
- US-A- 3 893 690

## Beschreibung

Die Erfindung betrifft eine Radnabenanordnung mit wenigstens einer Radnabe, die über wenigstens ein Radlager drehbar auf einem Achsstummel eines an einem Fahrzeugchassis angelenkten Achskörpers gelagert ist, und der ggf. eine Bremsanlage zugeordnet ist, entsprechend dem Oberbegriff vom Anspruch 1 und wie sie aus der DE 19963295 A bekannt ist.

Bei Radnabenanordnungen ist die Temperaturentwicklung des Radlagers und/oder der Bremsanlage ein Indikator dafür, ob der Fahrbetrieb fehlerfrei und damit verkehrssicher ist. So kündigt sich der Ausfall eines Radlagers häufig. durch einen Temperaturanstieg an. Weiter kann es auch in Folge einer starken Temperaturerhöhung zu Beschädigung einer bisher intakten Radnabenanordnung kommen.

Es besteht daher der Wunsch, die Temperaturentwicklungen von Radnabenanordnungen während des Fahrbetriebes zu erfassen und diese z.B. über ESB-Elektroniken oder separat auszuwerten und bei Gefahr den Fahrzeugführer zu alarmieren. So wird bspw. in der DE 102 39 695 C1 vorgeschlagen, einen Temperatursensor zur Temperaturüberwachung während des Betriebes in der Motorwicklung eines Stellmotors einer Bremszuspanneinrichtung vorzusehen. Dieser Temperatursensor kann über eine Signalleitung entsprechende Signale an eine Steuer- und Regeleinrichtung liefern. Auch weitere Komponenten der Bremszuspanneinrichtung können mit Temperatursensoren zur Temperaturüberwachung versehen sein.

In gleicher Weise wird in der DE 197 13 998 A1 ein Prüfstand zur Ermittlung der Lebensdauer von Radlagern vorgeschlagen, bei welchem die Temperatur des als Prüfling fungierenden Radlagers durch eine Radlagertemperaturmesseinrichtung in Lagernähe ermittelt wird.

Diese bekannten Systeme weisen zwar den Vorteil auf, dass eine frühe Warnung des Fahrzeugführers vor einem möglichen Ausfall einer Radlageranordnung erfolgen kann. In der Praxis haben sich derartige Systeme jedoch als sehr aufwändig erwiesen, da sowohl das Zugfahrzeug als auch mögliche Anhänger an allen Rädern oder Achsstummeln mit entsprechenden Sensoren ausgestattet sein müssen. Zudem muss eine den Fahrzeugführer warnende Einrichtung in dem Zugfahrzeug vorgesehen sein. Gerade bei Lastkraftwagen, bei denen einem Zugfahrzeug häufig verschiedene Anhänger unterschiedlicher Hersteller und/oder Bauformen zugeordnet werden, ist es schwierig, aufeinander abgestimmte einheitliche Systeme in den Zugfahrzeugen und den Anhängern vorzusehen. Ein derartiges System ist darüber hinaus unverhältnismäßig teuer, da eine sofortige Warnung bei oder nach einer Temperaturüberschreitung nach den bisherigen Erfahrungen nicht erforderlich ist.

Aus der DE 102 42 199 A1 ist eine Radlagerung bekannt, der Mittel zur Temperaturerfassung zugeordnet sind. Hierzu ist auf einer zwischen zwei Radlagern angeordneten Hülse ein Thermopunkt vorgesehen, der bei Erreichen einer definierten Temperatur seine Einfärbung durch Abschmelzen einer eingefärbten Schicht irreversibel verändert. Dieser Thermopunkt ist dabei derart angeordnet, dass er erst bei einer Wartung der Radlagerung sichtbar ist. Selbst bei regelmäßig durchgeführten Wartungen kann jedoch bereits ein Schaden an der Radlagerung aufgetreten sein, wenn der Thermopunkt nur bei Wartungen kontrolliert wird. Zudem ist es aufgrund von Verschmutzungen möglich, dass eine Farbänderung bei der bekannten Radlagerung nicht oder nur schwierig detektierbar ist.

Aufgabe der vorliegenden Erfindung ist es daher, eine Radnabenanordnung der eingangs genannten Art bereitzustellen, bei welcher die Anzeige einer im Betrieb ungewöhnlichen und damit gefahrvollen Temperaturbelastung kostengünstig und unabhängig von dem Fahrzeugtyp bereits bei einem Kontrollgang um das Fahrzeug leicht detektierbar und anzeigbar ist.

Diese Aufgabe wird erfindungsgemäß mit einer Radnabenanordnung nach Anspruch 1 gelöst. Dabei ist dem Achsstummel eine von außerhalb der Radnabenanordnung und damit von außerhalb des Fahrzeugs sichtbare Anzeigeeinrichtung zur Anzeige einer kritischen Temperaturbelastung des Radlagers und/oder der Bremsanlage zugeordnet, wobei diese Anzeigeeinrichtung ein sich bei Überschreiten einer kritischen Temperaturbelastung deformierendes Anzeigeelement aufweist. Erfindungsgemäß ist die Anzeigeeinrichtung zumindest teilweise in den Achsstummel integriert ist Die bspw. bei einer Störung in einem Radlager und/oder der Bremsanlage auftretenden Temperaturerhöhungen bewirken nach einer geringen Zeitverzögerung auch einen entsprechenden Temperaturanstieg im Achsstummel des Achskörpers oder in dessen unmittelbarer Umgebung. Hierdurch ist es möglich, die im Zentrum des teilweise hohlen Achsstummels mit möglichst geringem Abstand zur Innenkontur des Achsstummels entstehende Strahlungswärme als Messgröße zu nutzen.

Dadurch, dass die Anzeigeeinrichtung zur Anzeige der kritischen Temperaturbelastung dem Achsstummel zugeordnet ist, kann die teure und aufwändige Realisierung einer Temperaturerfassung über einen Sensor, welcher über Signalleitungen mit weiteren Geräten verbunden ist, entfallen. Vielmehr ist es möglich, das Auftreten einer kritischen Temperaturbelastung unmittelbar an dem Ort, an welchem die erhöhte Temperaturbelastung auftritt, anzuzeigen. Da ein Fahrzeugführer von Lastkraftwagen oder dgl. üblicherweise verpflichtet ist, täglich vor Fahrtantritt einen Rundgang um sein Fahrzeug mit einer Sichtkontrolle auf eventuell vorliegende Beschädigungen oder unzulässige Veränderungen zu machen, kann hierbei die Anzeigeeinrichtung kontrolliert und dabei eine z. B. am Vortag aufgetretene kritische Temperaturbelastung erkannt werden. Diese Kontrollintervalle sind in hohem Maße als ausreichend zu betrachten, um Gefährdungen, die von einer Beschädigung einer Radnabenanordnung ausgehen könnten, sicher zu vermeiden. Nach dem Erkennen einer derartigen kritischen Temperaturbelastung kann die Radnabenanordnung und insbesondere das Radlager und/oder die Bremsanlage überprüft werden.

Die Deformation des Anzeigeelements ermöglicht es einem Fahrzeugführer auf einen Blick zu erkennen, ob eine kritische Temperaturbelastung bei der Radnabenanordnung aufgetreten ist. Es ist bei dieser Ausführungsform folglich nicht notwendig, einen Messskala abzulesen oder dgl. aufwändige Prüfungsverfahren durchzuführen. Dies kann jedoch erfolgen, falls die exakte Ermittlung der aufgetretenen Temperaturen in der Radnabenanordnung von Interesse ist. In gleicher Weise ist auch keine Demontage von Komponenten der Radnabenanordnung erforderlich, um die eine kritische Temperaturbelastung zu erkennen. Zusätzlich zu dem sich bei Überschreiten einer kritischen Temperaturbelastung deformierenden Anzeigeelement kann die Anzeige bspw. auch über einen temperaturabhängigen Farbumschlag bzw. eine Farbänderung oder dgl. erreicht werden.

Das Deformieren eines Anzeigeelements bei Überschreiten einer kritischen Temperaturbelastung kann dadurch erreicht werden, dass die Anzeigeeinrichtung einen geschlossenen Behälter aufweist, der zumindest teilweise mit einem sich bei Erwärmung ausdehnenden Fluid gefüllt ist. Die Dimensionierung des Behälters sowie das Volumen und die Art des Fluids können dabei derart aufeinander abgestimmt sein, dass das sich ausdehnende Fluid bei einer festgelegten kritischen Temperaturbelastung die Deformation des Anzeigeelements bewirkt. Dabei kann das Anzeigeelement durch den Behälter selbst und/oder durch einen Deckel des Behälters gebildet sein.

Um eine kompakte Bauform der erfindungsgemäßen Radnabenanordnung zu erzielen und ein möglichst zeitnahes Ansprechen der Anzeigeeinrichtung zu bewirken, wird es bevorzugt, wenn die Anzeigeeinrichtung zumindest teilweise in den Achsstummel hineinragt. Hierzu kann in dem Achsstummel eine Ausnehmung und/oder ein Hohlraum zur zumindest teilweisen Aufnahme der Anzeigeeinrichtung ausgebildet sein.

Üblicherweise ist bei Radnabenanordnungen eine Radkappe vorgesehen, welche die Radnabe und/oder den Achsstummel zumindest teilweise abdeckt. Das sich bei Überschreiten der kritischen Temperaturbelastung deformierende Anzeigeelement kann dabei von der Radkappe und/oder von einem Bereich der Radkappe gebildet sein, wobei der Behälter und/oder sein Deckel in die Radkappe integriert, eingesetzt oder in anderer geeigneter Weise mit dieser verbunden sein kann. Die Anzeige der kritischen Temperaturbelastung durch eine zumindest bereichsweise deformierte Radkappe ist dabei von außen besonders gut erkennbar.

In Weiterbildung dieses Erfindungsgedankens ist es vorgesehen, dass die Radkappe und/oder ein Bereich der Radkappe mit einem geschlossenen Behälter verbunden ist und/oder als ein Deckel abdeckend auf einem Behälter aufgesetzt ist. Wie oben erläutert, kann dieser Behälter mit einem sich bei Erwärmung ausdehnenden Fluid gefüllt sein, so dass bei einer Temperaturerwärmung des in dem Behälter aufgenommenen Fluids sich dieses ausdehnt und die Radkappe oder einen definierten Bereich der Radkappe verformt.

Hierbei wird es bevorzugt, wenn die Radkappe und/oder ein Deckel des Behälters einen geschwächten Bereich und/oder eine Sollbruchstelle aufweist. Auf diese Weise ist es möglich, eine definierte Verformung der Radkappe bzw. des Deckels in Folge der Temperaturänderung zu erzeugen.

Um zu vermeiden, dass eine kurzzeitige Überschreitung einer kritischen Temperaturbelastung nicht oder zumindest nicht deutlich genug angezeigt wird, wird es bevorzugt, wenn sich die Radkappe oder ein Bereich der Radkappe und/oder ein Deckel des Behälters bei Überschreiten der kritischen Temperaturbelastung irreversibel aufwölbt. Alternativ ist es auch möglich, dass die Radkappe oder ein Bereich der Radkappe und/oder ein Deckel des Behälters bei Überschreiten der kritischen Temperaturbelastung auf- und/oder abplatzt. Eine derartige Deformation der Radkappe bzw. des Deckels ist auch bei einem flüchtigen Rundgang um das Fahrzeug sofort erkennbar.

Nach einer weiteren Ausführungsform der Erfindung ist es vorgesehen, dass in der Radkappe ein Kolben derart verschiebbar gelagert ist, dass der Kolben bei Überschreiten der kritischen Temperaturbelastung zumindest teilweise aus der Radkappe verschiebbar ist. Dieser Kolben kann dabei in und/oder an dem fluidgefüllten Behälter angeordnet sein oder in geeigneter Weise mit einem derartigen Behälter verbunden sein, so dass die Ausdehnung des in den Behälter aufgenommenen Fluids die Verschiebung des Kolbens bewirkt. Der Kolben zeigt folglich ähnlich dem Signalstift eines Schnellkochtopfes das Erreichen einer bestimmten Temperaturbelastung und einer dadurch erzeugten Druckerhöhung in dem Behälter an.

Um einen rasches Ansprechen der Anzeigeeinrichtung der erfindungsgemäßen Radnabenanordnung zu ermöglichen, stehen der Achsstummel und die Anzeigeeinrichtung vorzugsweise in wärmeleitendem Kontakt. Dies kann bspw. dadurch erfolgen, dass der Achsstummel und die Anzeigeeinrichtung in Flächenkontakt stehen oder zwischen diesen eine wärmeleitende Substanz angeordnet ist. Alternativ oder zusätzlich hierzu können auch Wärmeleitrippen vorgesehen sein, die eine Temperaturerhöhung in dem Achsstummel an und/oder in dem Behälter bzw. die Anzeigeeinrichtung weiterleiten.

Wenn im Fahrbetrieb Störungen im Radlager und/oder der Bremsanlage auftreten, die zu einer Temperaturerhöhung führen, deformiert sich das Anzeigeelement bei Erreichen einer kritischen Temperaturbelastung vorzugsweise zunächst irreversibel, indem es sich aufwölbt und/oder teilweise aus dem Behälter und/oder der Radkappe heraus geschoben wird. Wird der Fahrbetrieb trotz der Störung fortgesetzt, steigt die Betriebstemperatur weiter an, so dass das Anzeigeelement bei Überschreiten der kritischen Temperaturbelastung sich weiter deformiert, insbesondere an einer Sollbruchstelle auf- und/oder abplatzt. Hierdurch kann zwischen einem erst kürzlich aufgetretenen und/oder leichten Schaden und einer bereits länger bestehenden oder schwerwiegenderen Fehlfunktion unterschieden werden.

Die kritische Temperaturbelastung, die ein Ansprechen des Anzeigeelements bewirkt, sollte über der im Fahrbetrieb mit intakten Radlagern und einer intakten Bremsanlage auftretenden Temperaturbelastung liegen. Hierbei ist zu berücksichtigen, dass im regulären Fahrbetrieb ohne Schädigung der Radlager und der Bremsanlage bei hoher Bremsbeanspruchung, bspw. durch eine längere Bergabfahrt, bereits Temperaturerhöhungen im Bereich des Achsstummels auftreten, die jedoch unter denen liegen, die bei einer Beschädigung der Radlager oder der Bremsanlage auftreten.

Die Radnabenanordnung kann nach einer weiteren Ausführungsform der Erfindung auch derart gestaltet sein, dass sich die Farbe zumindest eines Elements der Anzeigeeinrichtung bei Überschreitung einer kritischen Deformation verändert. Ein solcher Farbumschlag bzw. eine Farbänderung lassen sich bei einer Kontrolle des Fahrzeugs besser von außen erkennen, als eine bloße Verformung eines Bauteils. Ein Schaden im Bereich der Radlager oder der Bremsanlage ist somit frühzeitig detektierbar.

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung unabhängig von ihrer Zusammenfassung in den Ansprüchen oder deren Rückbeziehung.

Es zeigen schematisch:
- Fig. 1: in Schnittansicht eine Radnabenanordnung nach einer ersten Ausführungsform der Erfindung,
- Fig. 2: in Schnittansicht eine Radnabenanordnung nach einer zweiten Ausführungsform der Erfindung, und
- Fig. 3: in Schnittansicht eine Radnabenanordnung nach einer dritten Ausführungsform der Erfindung.

Die in den Figuren dargestellte Radnabenanordnung 1 ist im Wesentlichen durch eine Radnabe 2 gebildet, welche über ein Radlager 3 drehbar auf einem Achsstummel 4 gelagert ist. Das Radlager 3 ist in den in den Figuren gezeigten Ausführungsformen durch ein Doppelschrägkegellager in O-Anordnung gebildet. Der Achsstummel 4 ist einstückig mit einem Achskörper 5 ausgebildet, der in an sich bekannter Weise bspw. über nicht dargestellte Führungslenker an einem Fahrzeugchassis gelagert ist.

Die Radnabenanordnung 1 weist weiter eine Bremsanlage 6 mit einer drehfest mit der Radnabe verbundenen Bremsscheibe 7 auf, wobei die Bremsbeläge und der Bremssattel aus Gründen der Übersichtlichkeit in den Figuren nicht dargestellt sind.

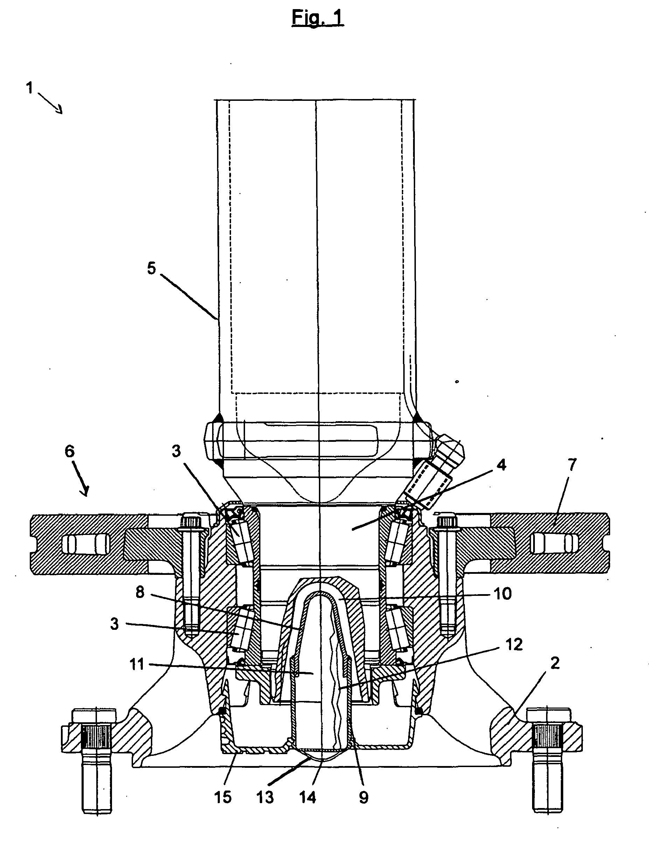

In dem Achsstummel 4 ist in der Ausführungsform nach Figur 1 durch ein erstes Behälterelement 8 und ein zweites Behälterelement 9 in einem zentralen Hohlraum 10 ein Behälter 11 gebildet. Der Hohlraum 10 erstreckt sich dabei in dem Achsstummel 4 zumindest bis in die Nähe des Radlagers 3. Der Behälter 11 taucht mit seinem halbkugelförmigen Ende des ersten Behälterelements 8 bis dicht an den mit einer ähnlichen Kontur ausgebildeten Boden des Hohlraumes 10 ein, um so eine gute Wärmeleitung zwischen dem Achsstummel 4 und dem Behälter 11 zu ermöglichen. Das erste Behälterelement 8 und das zweite Behälterelement 9 sind dichtend mit einander verbunden, so dass der Behälter 11 einen geschlossenen Druckraum bildet, in welchem ein Fluid 12 aufgenommen ist, welches sich bei Erwärmung ausdehnt.

Auf der dem Achskörper 5 abgewandten Seite ist der Behälters 11 durch einen Deckel 13 des zweiten Behälterelements 9 verschlossen, der eine Sollbruchstelle 14 aufweisen kann. Der Deckel 13, der in der gezeigten Ausführungsform einstückig mit dem zweiten Behälterelement 9 ausgebildet ist, wird bei einer Ausdehnung des in dem Behälter aufgenommenen Fluids in Folge einer Temperaturerhöhung, die über den bei hoher Bremsbeanspruchung, bspw. durch längere Bergabfahrt, auftretenden Temperaturbelastungen liegt, zunächst irreversibel aufgewölbt. Wird der Fahrbetrieb weiter fortgesetzt, steigt die Temperatur weiter an, so dass die Sollbruchstelle 14 aufplatzen kann, wodurch das Fluid 12 aus dem Behälter 11 austreten kann.

Der Deckel 13 ist dabei zusammen mit dem Behälter 11 in einer Radkappe 15 aufgenommen, welche den Achsstummel und das Radlager 3 auf der dem Achskörper 5 abgewandten Seite nach außen abdeckt. In seinem nicht aufgewölbten Zustand liegt der Deckel 13 dabei zumindest näherungsweise in einer Ebene mit der Radkappe 15. Bei einem Aufwölben des Deckels 13 steht dieser wie in Figur 1 angedeutet von der Radkappe 15 hervor, so dass diese Deformation des Deckels 13 von außen leicht erkennbar ist.

Der Behälter 11, das Fluid 12 und die Gestaltung des Deckels 13 bzw. des zweiten Behälterelements 9 sind dabei derart aufeinander abgestimmt, dass bei Überschreiten einer vorbestimmten kritischen Temperaturbelastung, die bspw. das Versagen des Radlagers 3 ankündigen kann, die Wärme von dem Radlager 3 über dem Achsstummel 4 auf den Behälter 11 übertragen wird, in welchem sich das Fluid 12 derart ausdehnt, dass der Deckel 13 irreversibel nach außen aufgewölbt wird und dass beim weiterem Temperaturanstieg infolge fortgesetzten Fahrbetriebs nach Aufbrechen der Sollbruchstelle 14 das Fluid 12 aus dem Behälter 11 austritt. Der Deckel 13 bildet somit eine Anzeigeeinrichtung, zur Anzeige der kritischen Temperaturbelastung des Radlagers 3. In gleicher Weise kann auch eine kritische Temperaturbelastung der Bremsanlage 6 durch den Deckel 13 bzw. das zweite Behälterelement 9 angezeigt werden.

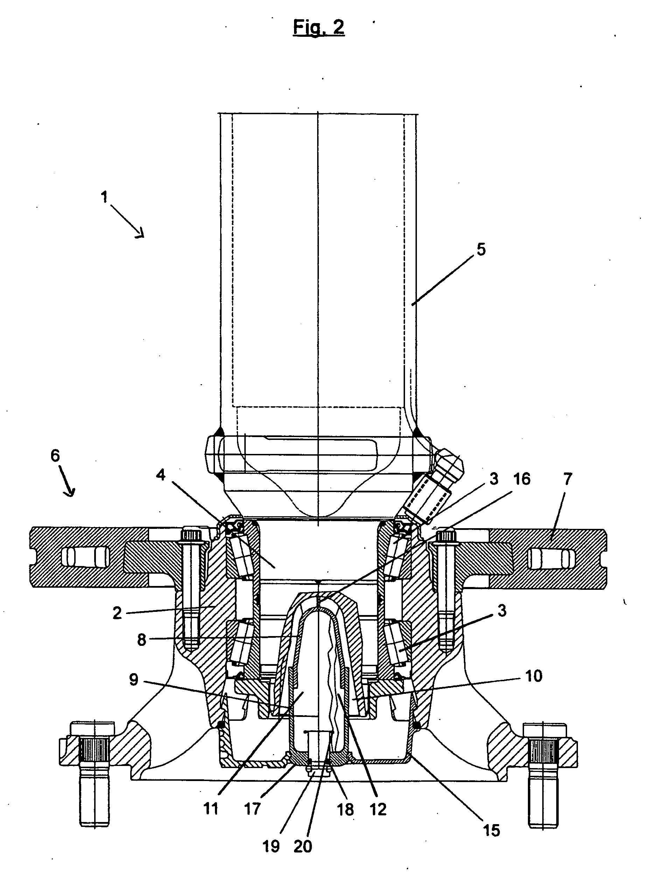

Eine zweite Ausführungsform einer erfindungsgemäßen Radnabenanordnung 1 ist in Figur 2 dargestellt. Der Achsstummel 4, das Radlager 3, die Radnabe 2 und die Bremsanlage 6 haben dabei den oben unter Bezugnahme auf Figur 1 erläuterten Aufbau. Weiter ist bei der Ausführungsform nach Figur 2 auch eine Radkappe 15 vorgesehen, welche den Achsstummel 4 und das Radlager 3 abdeckt.

In dem zentralen Hohlraum 10 des Achsstummels 4 sind Wärmeleitrippen 16 ausgebildet, die mit dem ersten Behälterelement 8 des Behälters 11 in Verbindung stehen, der zumindest teilweise mit einem sich bei Erwärmung ausdehnenden Fluid 12 gefüllt ist. Die Wärmeleitrippen 16 können auch bis an den Boden des Hohlraumes 10 heranreichen und sich während der ersten Radumdrehungen der Bodenform anpassen. Die Wärmeübertragung kann hierdurch verbessert werden. Der Behälter 11 ist durch das erste Behälterelement 8 und das druckdicht mit diesem verbundene zweite Behälterelement 9 abgedichtet verschlossen. Auf der dem Achskörper 5 abgewandten Seite ist in dem zweiten Behälterelement 9 einstückig ein Deckel 17 ausgebildet, der zuminderst näherungsweise in einer Ebene mit der Radkappe 15 liegt. In diesem Deckel 17 des Behälters 11 ist über eine Abdichtung 18 ein Kolben 19 verschiebbar gelagert.

Der Kolben 19 ist dabei mit seinem Kolbenrand 20 über einen Sollbruchrand mit dem Behälter 11 verbunden.

Der Behälter 11, das Fluid 12 und der Kolben 19 mit dem Sollbruchrand sind dabei derart aufeinander abgestimmt, dass bei einer kritischen Temperaturbelastung in dem Achsstummel 4 aufgrund einer Temperaturerhöhung in dem Radlager 3 und/oder der Bremsanlage 6 der Kolben 19 zunächst nach außen gedrückt wird, wodurch bereits das Erreichen einer kritischen Betriebsteniperatur signalisiert wird. Wird der Fahrbetrieb trotz eines Schadens an dem Radlager 3 oder der Bremsanlage fortgesetzt, steigt die Temperatur und dadurch auch der Druck in dem Behälter 11 weiter an, so dass der Kolbenrand 20 als Sollbruchrand durch den Innendruck des Fluids 12 in dem Behälter 11 aufgebrochen wird. Hierdurch verschiebt sich der Kolben 19 weiter aus dem Behälter 11 bzw. dem Deckel 17 hinaus, d.h. von dem Achskörper 5 weg. Der Kolben 19 steht dann schon deutlich von der Radkappe 15 weg, so dass der Kolben 19 das Anzeigeelement einer Anzeigeeinrichtung bildet, welcher eine kritische Temperaturbelastung des Radlagers 3 und/oder der Bremsanlage 6 anzeigt. Ggf. kann der Kolben 19 sogar vollständig aus dem Behälter bzw. der Radkappe herausgedrückt werden und geht dann verloren.

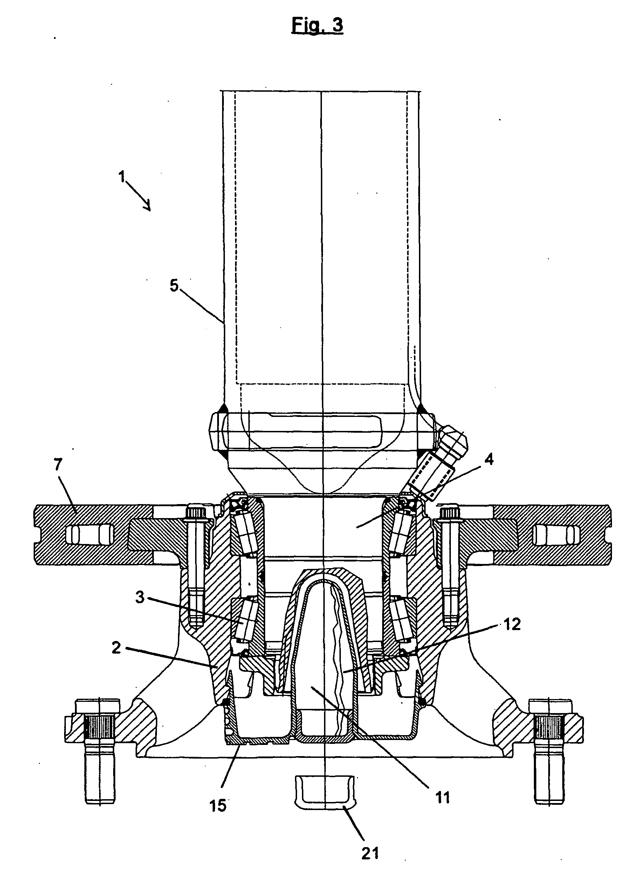

Eine weitere Ausführungsform der erfindungsgemäßen Radnabenanordnung ist in Figur 3 dargestellt, wobei die Radnabenanordnung grundsätzlich einen ähnlichen Aufbau wie oben unter Bezugnahme auf die Figuren 1 und 2 erläutern hat.

In dem zentralen Hohlraum 10 des Achsstummels 4 ist wiederum ein Behälter 11 eingesetzt, der mit einem sich bei Erwärmung ausdehnenden Fluid 12 gefüllt ist. Der Behälter 11 ist im Gegensatz zu den oben beschriebenen Ausführungsformen als eine Vertiefung in der Radkappe 15 geformt, mit der der Behälter 11 einstückig ausgebildet ist. Der Behälter 11 wird durch einen getrennten Deckel 21 verschlossen, der in diesem Zustand zumindest näherungsweise in einer Ebene mit der Radkappe 15 liegt, welche den Achsstummel 4 und das Radlager 3 abdeckt. Der Deckel 21 ist dabei derart in den Behälter 11 eingesetzt, dass dieser im normalen Fahrbetrieb nicht von dem Behälter 11 abfällt.

Dagegen kann der Deckel 21 wie in Figur 3 angedeutet aus dem Behälter 11 herausgepresst werden, wenn sich das in dem Behälter aufgenommene Fluid 12 aufgrund einer Erwärmung des Radlagers und/oder der Bremsanlage 6 über eine kritische Temperaturbelastung hinaus erwärmt. Der Deckel 21 fällt dann von dem Behälter 11 und der Radkappe 15 ab, so dass rasch erkennbar ist, dass eine kritische Temperaturbelastung erreicht wurde.

In der Ausführungsform nach Figur 3 ist der Behälter 11 durch einen einteiligen geschlossenen Zylinder gebildet, der in dem Hohlraum 10 des Achsstummels 4 aufgenommen ist. Alternativ hierzu kann der Behälter 11 jedoch auch aus mehreren Komponenten gebildet sein, wie bspw. in den Ausführungsformen nach Figur 1 und 2 dargestellt oder umgekehrt.

Der Behälter 11 und/oder ein ggf. vorgesehener Deckel 13, 17, 21 können aus einem Kunststoff oder einem anderen geeigneten Material bestehen. Als sich bei Erwärmung ausdehnendes Fluid 12 kann bspw. Wasser eingesetzt werden. Alternativ ist es jedoch auch möglich, ein anderes flüssiges oder gasförmiges Fluid zu verwenden, welches bezüglich seiner Ausdehnung bei möglichen Veränderungen der Temperatur infolge eines Schadens der Radnabenanordnung 1 ausgewählt ist.

Statt eines mit einem flüssigen oder gasförmigen Medium 12 befüllten Behälters 11 kann auch ein Festkörper vorgesehen sein, der sich bei Erwärmung der Radnabenanordnung ausdehnt und dabei ein Anzeigeelement, bspw. einen Deckel oder die Radkappe 15, deformiert.

Der Behälter 11 steht erfindungsgemäß bei sämtlichen beschriebenen Ausführungsformen mit der Radkappe 15 und dem Achsstummel 4, bspw. durch die Wärmeleitrippen 16 oder den allenfalls sehr geringen Abstand zwischen dem Hohlraum 10 und dem Behälter, in engem Kontakt. Hierdurch ist eine gute Wärmeleitung zwischen dem Achsstummel 4 und der Anzeigeeinrichtung zur Anzeige einer kritischen Temperaturbelastung des Radlagers 3 und/oder der Bremsanlage 6 möglich, die ein besonders rasches Ansprechen der Anzeigeeinrichtung sicherstellt. Mögliche Schäden lassen sich so frühzeitig erkennen, bevor weitere Defekte, bspw. infolge einer hohen Temperaturbelastung, auftreten. Zudem können auch unterschiedliche Schädigungsstufen, die verschieden hohe Temperaturbelastungen erzeugen, mit einfachen Mitteln sichtbar gemacht werden, bspw. durch ein Verformen eines Elements der Anzeigeeinrichtung bei geringer Temperaturerhöhung und ein Abplatzen eines Elements der Anzeigeeinrichtung bei höherer Temperaturerhöhung oder durch Farbumschläge.

### Bezugszeichenliste:

- 1: Radnabenanordnung
- 2: Radnabe
- 3: Radlager
- 4: Achsstummel
- 5: Achskörper
- 6: Bremsanlage
- 7: Bremsscheibe
- 8: erstes Behälterelement
- 9: zweites Behälterelement
- 10: Hohlraum
- 11: Behälter (Druckraum)
- 12: Fluid
- 13: Deckel
- 14: Sollbruchstelle
- 15: Radkappe
- 16: Wärmeleitrippe
- 17: Deckel
- 18: Abdichtung
- 19: Kolben
- 20: Kolbenrand (Sollbruchrand)
- 21: Deckel

## Patentansprüche

1. Radnabenanordnung mit wenigstens einer Radnabe (2), die über wenigstens ein Radlager (3) drehbar auf einem Achsstummel (4) eines an einem Fahrzeugchassis gelagerten Achskörpers (5) gelagert ist, und der ggf. eine Bremsanlage (6) zugeordnet ist, wobei dem Achsstummel (4) eine von außerhalb der Radnabenanordnung sichtbare Anzeigeeinrichtung (11, 13, 19, 21) zur Anzeige einer kritischen Temperaturbelastung des Radlagers (3) und/oder der Bremsanlage (6) zugeordnet ist, und wobei diese Anzeigeeinrichtung ein sich bei Überschreiten einer kritischen Temperaturbelastung deformierendes Anzeigeelement (13, 19, 21) aufweist **dadurch gekennzeichnet, dass** die Anzeigeeinrichtung (11, 13, 19, 21) zumindest teilweise in den Achsstummel (4) integriert ist.

2. Radnabenanordnung nach Anspruch 1, **dadurch gekennzeichnet, dass** die Anzeigeeinrichtung (11, 13, 19, 21) einen geschlossenen Behälter (11), der zumindest teilweise mit einem sich bei Erwärmung ausdehnenden Fluid (12) gefüllt ist, oder einen sich bei Erwärmung ausdehnenden Festkörper aufweist.

3. Radnabenanordnung nach einem der Ansprüche 1 oder 2, **dadurch gekennzeichnet, dass** in dem Achsstummel (4) eine Ausnehmung und/oder ein Hohlraum (10) zur zumindest teilweisen Aufnahme der Anzeigeeinrichtung (11, 13,19,21) ausgebildet sind.

4. Radnabenanordnung nach einem der Ansprüche 1 bis 3, **dadurch gekennzeichnet, dass** das sich bei Überschreiten der kritischen Temperaturbelastung deformierende Anzeigeelement (13, 19, 21) von der Radkappe (15) und/oder von einem Bereich der Radkappe (15) gebildet ist und/oder der Radkappe (15) zugeordnet ist.

5. Radnabenanordnung nach Anspruch 4, mit einer Radkappe (15), **dadurch gekennzeichnet, dass** die Radkappe (15) und/oder ein Bereich der Radkappe (15) mit einem geschlossenen Behälter (11) verbunden ist und/oder als ein Deckel abdichtend auf einen Behälter aufgesetzt ist.

6. Radnabenanordnung nach einem der Ansprüche 1 bis 5, **dadurch gekennzeichnet, dass** eine Radkappe (15) und/oder ein Deckel (13, 21) des Behälters (11) einen geschwächten Bereich und/oder eine Sollbruchstelle (14) aufweist.

7. Radnabenanordnung nach einem der Ansprüche 1 bis 6, **dadurch gekennzeichnet, dass** sich die Radkappe (15) oder ein Bereich der Radkappe und/oder ein Deckel (13, 21) des Behälters (11) bei Überschreiten der kritischen Temperaturbelastung vorzugsweise irreversibel aufwölbt.

8. Radnabenanordnung nach einem der Ansprüche 1 bis 7, **dadurch gekennzeichnet, dass** die Radkappe (15) oder ein Bereich der Radkappe und/oder ein Deckel (13, 21) des Behälters (11) bei Überschreiten der kritischen Temperaturbelastung auf- und/oder abplatzt.

9. Radnabenanordnung nach einem der Ansprüche 4 bis 6, **dadurch gekennzeichnet, dass** in der Radkappe (15) und/oder in dem Behälter (11) ein Kolben (19) derart verschiebbar gelagert ist, dass der Kolben (19) bei Überschreiten der kritischen Temperaturbelastung zumindest teilweise aus der Radkappe (15) und/oder dem Behälter (11) verschiebbar ist.

10. Radnabenanordnung nach einem der Ansprüche 1 bis 9, **dadurch gekennzeichnet, dass** der Achsstummel (4) und die Anzeigeeinrichtung (11, 13, 19, 21), vorzugsweise durch Flächenkontakt und/oder Wärmeleitrippen (16), in wärmeleitendem Kontakt stehen.

11. Radnabenanordnung nach einem der Ansprüche 1 bis 10, **dadurch gekennzeichnet, dass** sich das Anzeigeelement (13, 19, 21) bei Erreichen einer kritischen Temperaturbelastung zunächst irreversibel deformiert, insbesondere aufwölbt und/oder teilweise aus einem Behälter (11) und/oder einer Radkappe (15) heraus geschoben wird, und dass das Anzeigeelement (13,19,21) bei weiterem Überschreiten der kritischen Temperaturbelastung insbesondere an einer Sollbruchstelle (14) auf- und/oder abplatzt.

12. Radnabenanordnung nach einem der Ansprüche 1 bis 11, **dadurch gekennzeichnet, dass** die kritische Temperaturbelastung über der im Fahrbetrieb mit intakten Radlagern (3) und einer intakten Bremsanlage (6) bei hoher Bremsbeanspruchung auftretenden Temperaturbelastung liegt.

13. Radnabenanordnung nach einem der Ansprüche 1 bis 12, **dadurch gekennzeichnet, dass** zumindest ein Element der Anzeigeeinrichtung derart ausgebildet ist, dass dessen Farbe bei Überschreiten einer kritischen Temperaturbelastung verändert wird und/oder umschlägt.

14. Radnabenanordnung nach einem der Ansprüche 1 bis 12, **dadurch gekennzeichnet, dass** zumindest ein Element der Anzeigeeinrichtung derart ausgebildet ist, dass dessen Farbe bei Überschreitung einer kritischen Deformation verändert wird.

## Claims

1. A wheel hub arrangement with at least one wheel hub (2), which is rotatably mounted via at least one wheel bearing (3) on an axle stub (4) of an axle beam (5) mounted on a vehicle chassis, and with which, if applicable, a brake system (6) is associated, wherein an indicator arrangement (11, 13, 19, 21), visible from outside the wheel hub arrangement, for indicating a critical temperature load of the wheel bearing (3) and/or of the brake system (6) is associated with the axle stub (4), and wherein this indicator arrangement has an indicator element (13, 19, 21) which deforms when a critical temperature load is exceeded, **characterized in that** the indicator arrangement (11, 13, 19, 21) is at least partially integrated into the axle stub (4).

2. The wheel hub arrangement according to Claim 1, **characterized in that** the indicator arrangement (11, 13, 19, 21) has a closed container (11), which is at least partially filled with a fluid (12) expanding on heating, or has a solid body expanding on heating.

3. The wheel hub arrangement according to any of Claims 1 or 2, **characterized in that** a recess and/or a cavity (10) are formed in the axle stub (4) to hold the indicator arrangement (11, 13, 19, 21) at least partially.

4. The wheel hub arrangement according to any of Claims 1 to 3, **characterized in that** the indicator element (13, 19, 21), which deforms when the critical temperature load is exceeded, is formed by the hub cap (15) and/or by a region of the hub cap (15) and/or is associated with the hub cap (15).

5. The wheel hub arrangement according to Claim 4 with a hub cap (15), **characterized in that** the hub cap (15) and/or a region of the hub cap (15) is connected with a closed container (11) and/or is placed onto a container in a sealing manner as a cover.

6. The wheel hub arrangement according to any of Claims 1 to 5, **characterized in that** a wheel cap (15) and/or a cover (13, 21) of the container (11) has a weakened region and/or a predetermined breaking point (14).

7. The wheel hub arrangement according to any of Claims 1 to 6, **characterized in that** the wheel hub (15) or a region of the wheel hub and/or a cover (13, 21) of the container (11) bulges, preferably irreversibly, when the critical temperature load is exceeded.

8. The wheel hub arrangement according to any of Claims 1 to 7, **characterized in that** the wheel hub (15) or a region of the wheel hub and/or a cover (13, 21) of the container (11) bursts open and/or off when the critical temperature load is exceeded.

9. The wheel hub arrangement according to any of Claims 4 to 6, **characterized in that** a piston (19) is displaceably mounted in the wheel hub (15) and/or in the container (11) such that the piston (19) is displaceable at least partially out of the wheel hub (15) and/or the container (11) when the critical temperature load is exceeded.

10. The wheel hub arrangement according to any of Claims 1 to 9, **characterized in that** the axle stub (4) and the indicator arrangement (11, 13, 19, 21) are in heat-conducting contact preferably by surface contact and/or heat-conducting ribs (16).

11. The wheel hub arrangement according to any of Claims 1 to 10, **characterized in that** the indicator element (13, 19, 21) firstly deforms irreversibly when a critical temperature load is reached, in particular bulges and/or is partially pushed out of a container (11) and/or of a wheel hub (15), and that the indicator element (13, 19, 21) bursts open and/or off in particular at a predetermined breaking point (14) on further exceeding of the critical temperature load.

12. The wheel hub arrangement according to any of Claims 1 to 11, **characterized in that** the critical temperature load lies above the temperature load occurring in driving operation with intact wheel bearings (3) and an intact brake system (6) with high braking stress.

13. The wheel hub arrangement according to any of Claims 1 to 12, **characterized in that** at least one element of the indicator arrangement is constructed such that its colour is altered and/or changes over when a critical temperature load is exceeded.

14. The wheel hub arrangement according to any of Claims 1 to 12, **characterized in that** at least one element of the indicator arrangement is constructed such that its colour is altered when a critical deformation is exceeded.

## Revendications

1. Agencement de moyeu de roue comprenant au moins un moyeu de roue (2), qui est logé sur une fusée d'essieu (4) d'un corps d'essieu (5) monté sur un châssis de véhicule de façon à pouvoir tourner au moyen d'au moins un palier de roue (3), et qui est associé éventuellement à une installation de freinage (6), un dispositif d'affichage (11, 13, 19, 21) visible de l'extérieur de l'agencement de moyeu de roue, destiné à l'affichage d'une charge de température critique du palier de roue (3) et/ou de l'installation de freinage (6) étant attribué à la fusée d'essieu (4), et ce dispositif d'affichage présentant un élément d'affichage (13, 19, 21) se déformant en cas de dépassement d'une charge de température critique, **caractérisé en ce que** le dispositif d'affichage (11, 13, 19, 21) est intégré au moins en partie dans la fusée d'essieu (4).

2. Agencement de moyeu de roue selon la revendication 1, **caractérisé en ce que** le dispositif d'affichage (11, 13, 19, 21) présente un récipient (11) fermé, qui est rempli au moins partiellement avec un fluide (12) se dilatant en cas de réchauffement, ou un corps solide se dilatant en cas de réchauffement.

3. Agencement de moyeu de roue selon l'une quelconque des revendications 1 ou 2, **caractérisé en ce qu'**un évidement et/ou une cavité (10) pour le logement au moins partiel du dispositif d'affichage (11, 13, 19, 21) sont réalisés dans la fusée d'essieu (4).

4. Agencement de moyeu de roue selon l'une quelconque des revendications 1 à 3, **caractérisé en ce que** l'élément d'affichage (13, 19, 21), qui se déforme en cas de dépassement de la charge de température critique, est formé par le moyeu de roue (15) et/ou par une zone du moyeu de roue (15) et/ou est associé au moyeu de roue (15).

5. Agencement de moyeu de roue selon la revendication 4, avec un moyeu de roue (15), **caractérisé en ce que** le moyen de roue (15) et/ou une zone du moyen de roue (15) est relié(e) à un récipient (11) fermé et/ou est posé(e) comme un couvercle de façon étanche sur un récipient.

6. Agencement de moyeu de roue selon l'une quelconque des revendications 1 à 5, **caractérisé en ce qu'**un moyeu de roue (15) et/ou un couvercle (13, 21) du récipient (11) présente une zone affaiblie et/ou un point de rupture théorique (14).

7. Agencement de moyeu de roue selon l'une quelconque des revendications 1 à 6, **caractérisé en ce que** le moyeu de roue (15) ou une zone du moyeu de roue et/ou un couvercle (13, 21) du récipient (11) s'incurve de préférence de façon irréversible en cas de dépassement de la charge de température critique.

8. Agencement de moyeu de roue selon l'une quelconque des revendications 1 à 7, **caractérisé en ce que** le moyeu de roue (15) ou une zone du moyeu de roue et/ou un couvercle (13, 21) du récipient (11) se fendille et/ou éclate en cas de dépassement de la charge de température critique.

9. Agencement de moyeu de roue selon l'une quelconque des revendications 4 à 6, **caractérisé en ce qu'**un piston (19) est logé de façon coulissante dans le moyeu de roue (15) et/ou dans le récipient (11), **en ce que** le piston (19) peut coulisser au moins partiellement à partir du moyeu de roue (15) et/ou du récipient (11) en cas de dépassement de la charge de température critique.

10. Agencement de moyeu de roue selon l'une quelconque des revendications 1 à 9, **caractérisé en ce que** la fusée d'essieu (4) et le dispositif d'affichage (11, 13, 19, 21) sont en contact thermoconducteur de préférence par contact de surface et/ou par des nervures conductrices de chaleur (16).

11. Agencement de moyeu de roue selon l'une quelconque des revendications 1 à 10, **caractérisé en ce que** l'élément d'affichage (13, 19, 21) se déforme d'abord de façon irréversible lorsqu'on atteint une charge de température critique, en particulier s'incurve et/ou est poussé en partie à la sortie d'un récipient (11) et/ou d'un moyeu de roue (15), et **en ce que** l'élément d'affichage (13, 19, 21) se fendille et/ou éclate dans le cas d'un nouveau dépassement de la charge de température critique, en particulier sur un point de rupture théorique (14).

12. Agencement de moyeu de roue selon l'une quelconque des revendications 1 à 11, **caractérisé en ce que** la charge de température critique se situe au-dessus de la charge de température qui apparaît dans le mode de roulement avec des paliers de roue (3) intacts et une installation de freinage (6) intacte en cas de forte sollicitation de freinage.

13. Agencement de moyeu de roue selon l'une quelconque des revendications 1 à 12, **caractérisé en ce qu'**au moins un élément du dispositif d'affichage est conçu de telle sorte que sa couleur varie et/ou vire en cas de dépassement d'une charge de température critique.

14. Agencement de moyeu de roue selon l'une quelconque des revendications 1 à 12, **caractérisé en ce qu'**au moins un élément du dispositif d'affichage est réalisé de telle sorte que sa couleur est modifiée en cas de dépassement d'une déformation critique.
